Europäisches Patentamt

European Patent Office

Office européen des brevets

(19)

(11) EP 0 580 695 B1

(12) FASCICULE DE BREVET EUROPEEN

(45) Date de publication et mention
de la délivrance du brevet:
**11.09.1996 Bulletin 1996/37**

(21) Numéro de dépôt: **92908907.6**

(22) Date de dépôt: **27.03.1992**

(51) Int Cl.⁶: **G01S 15/50**

(86) Numéro de dépôt international:
**PCT/FR92/00279**

(87) Numéro de publication internationale:
**WO 92/18878 (29.10.1992 Gazette 1992/27)**

(54) **PROCEDE DE COMPENSATION DU MOUVEMENT DE L'ANTENNE POUR UN SONAR**

VERFAHREN ZUR KOMPENSATION DER ANTENNENBEWEGUNG BEI EINEM SONARGERÄT

MOVEMENT COMPENSATION METHOD FOR A SONAR ANTENNA

(84) Etats contractants désignés:
DE GB IT

(30) Priorité: **16.04.1991 FR 9104626**

(43) Date de publication de la demande:
**02.02.1994 Bulletin 1994/05**

(73) Titulaire: **THOMSON-CSF**
**75008 Paris (FR)**

(72) Inventeurs:
• **DOISY, Yves**
**F-92045 Paris-La Défense Cédex 67 (FR)**

• **BAUDOUX, Jean-Pierre**
**F-92045 Paris-La Défense Cédex 67 (FR)**
• **LE PARQUIER, Guy**
**F-92045 Paris-La Défense Cédex 67 (FR)**

(74) Mandataire: **Desperrier, Jean-Louis et al**
**THOMSON-CSF**
**SCPI**
**B.P. 329**
**50, rue Jean-Pierre Timbaud**
**92402 Courbevoie Cédex (FR)**

(56) Documents cités:
EP-A- 0 028 895          GB-A- 1 486 068
GB-A- 2 184 236

# EP 0 580 695 B1

## Description

La présente invention se rapporte aux procédés qui permettent de compenser dans les sonars les mouvements de l'antenne qui risquent de perturber la réception des signaux acoustiques .

Il est connu pour détecter une cible en mouvement avec un sonar, d'utiliser l'effet Doppler en émettant une impulsion acoustique dont la bande de fréquence est plus faible que le décalage Doppler susceptible d'affecter les échos provenant de cibles en mouvement. A la réception on corrèle les signaux reçus avec plusieurs copies des signaux émis, chaque copie correspondant à un décalage Doppler différent. Le type de corrélation obtenu avec la copie qui correspond à un décalage Doppler identique ou sensiblement identique à celui de la cible permet de localiser en distance cette cible, ainsi que de déterminer sa vitesse radiale par rapport au sonar. Ce procédé est tout à fait compatible avec les autres systèmes de traitement des signaux, en particulier ceux qui consistent à faire des voies de réception directives. Ce procédé permet d'améliorer le contraste entre l'écho utile qui est affecté d'un décalage Doppler et les autres échos provenant de la réverbération aussi bien du fond et de la surface de la mer, que du volume lui-même du milieu sous-marin dont les hétérogénéités provoquent un écho ambiant diffus qui est très gênant pour un sonar simple. En effet les échos dus à la réverbération ne sont pas affectés d'un décalage Doppler puisque les éléments à l'origine de cette réverbération ne bougent pas ce qui permet de les éliminer. Ceci suppose que la cible est mobile ce qui est généralement le cas.

Très souvent le sonar est porté, ou remorqué, par un bateau qui se déplace à une vitesse qui n'est pas négligeable par rapport à celle de la cible. Dans ce cas les échos dus à la réverbération se trouvent affectés d'un décalage Doppler provenant de la vitesse propre du sonar. Comme l'émission couvre en général un secteur angulaire large, il y a toujours des sources de réverbération dont la vitesse radiale par rapport au sonar se trouve sensiblement égale à celle de la cible en mouvement. Dans ces conditions le contraste écho/bruit est sensiblement limité par ces sources de réverbération, même si ces sources se trouvent en dehors du lobe principal de la voie de réception utilisée puisque, comme on le sait, il y a toujours des lobes secondaires relativement importants dans le diagramme d'une telle voie.

Pour ne pas être trop gêné par un tel effet, il faudrait que la cible se déplace à une vitesse au moins supérieure à deux fois la vitesse du bâtiment qui porte le sonar. Ceci conduirait à limiter très sérieusement la vitesse du bâtiment et donc ses capacités opérationnelles. Si en outre la cible est une torpille qui se dirige vers le bateau, on imagine facilement les conséquences catastrophiques d'une telle réduction de vitesse sur les capacités à échapper justement à cette torpille.

Pour surmonter les problèmes liés aux mouvements du sonar, l'invention propose un procédé de compensation du mouvement de l'antenne pour un sonar, dans lequel l'antenne comprend un ensemble de transducteurs et est entraînée dans un mouvement de translation, principalement caractérisé en ce que l'on commute les signaux de ces transducteurs pour obtenir un mouvement fictif de l'antenne permettant de compenser le décalage Doppler apporté aux échos fixes par ledit mouvement de translation.

D'autres particularités et avantages de l'invention apparaîtront clairement dans la description suivante faite à titre d'exemple non limitatif en regard des figures annexées qui représentent :

- la figure 1, un schéma de réception d'une cible et d'une cellule de réverbération ;
- la figure 2, un bateau remorquant une antenne sonar
- la figure 3, le diagramme de construction des antennes virtuelles d'un sonar selon l'invention
- la figure 4, la variation de phase dans le temps du signal de réception ;
- la figure 5, le spectre de ce signal ; et
- la figure 6, le schéma synoptique d'un dispositif de mise en oeuvre de l'invention.

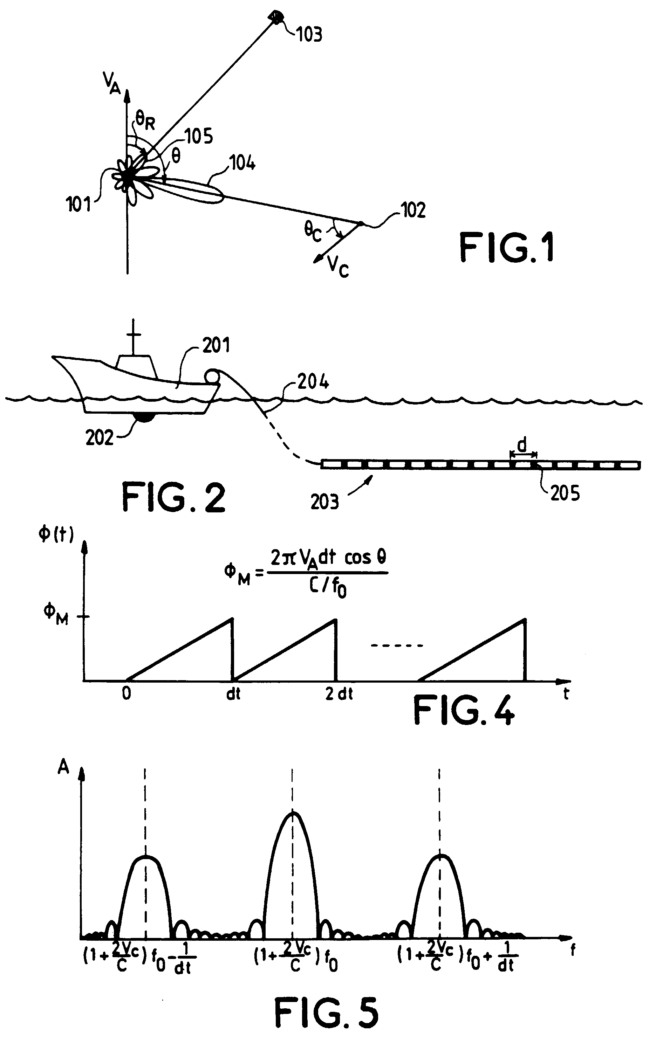

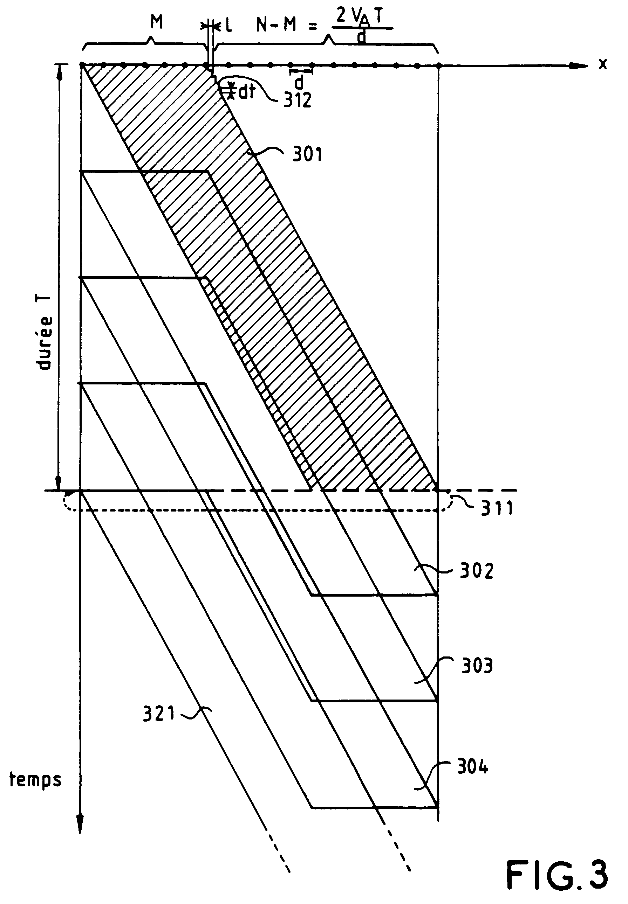

Sur la figure 1, un sonar 101 porté par un bateau se déplaçant avec une vitesse $V_A$ reçoit l'écho d'une cible 102 située dans un gisement $\theta$ correspondant au lobe principal d'une voie de réception 104.

Cette cible se déplace avec une vitesse $V_c$ formant un angle $\theta_c$ par rapport à l'axe de la voie de réception 104. Le sonar reçoit en outre des échos de différents endroits de la mer formant des cellules de réverbération. Une de celles-ci, 103 par exemple, se trouve dans un gisement $\theta_R$ par rapport à $V_A$, ce gisement correspondant à un lobe secondaire 105 de la voie de réception principale 104.

En partant de la formule connue donnant le décalage Doppler qui est égal :

$$(1) \qquad \frac{2\,V_r}{c}\,f_o$$

où $V_r$ est la vitesse radiale entre la cible et le sonar, c la vitesse du son dans l'eau, et $f_0$ la fréquence d'émission du sonar, le décalage Doppler sera le même pour la cible et la cellule de réverbération 103 lorsque les paramètres de ces deux sources d'écho répondront à l'équation suivante :

$$(2) \qquad V_A \cos \theta_r = V_c \cos \theta_c + V_A \cos \theta$$

2

Comme les cellules de réverbération sont situées dans tout l'espace environnant le sonar, particulièrement celles provenant de la réverbération de volume, cette égalité a toutes les chances d'être respectée dans une ou plusieurs directions correspondant à des lobes secondaires de réception du sonar. Même si ces lobes sont relativement atténués par rapport au lobe principal, le résultat est finalement fortement perturbé.

On a représenté sur la figure 2 un bâtiment tracteur 201 qui comporte sous sa coque un émetteur sonar 202 qui rayonne de manière sensiblement omnidirectionnelle dans tout l'espace sous-marin. Le bâtiment tracte à l'aide d'un câble de remorquage 204 une antenne sonar linéaire 203 formée d'un ensemble de capteurs 205 régulièrement espacés d'une distance d le long de l'antenne.

Comme expliqué plus haut, le bâtiment avance dans une direction sensiblement parallèle à son axe avec une vitesse $V_A$. Il entraîne bien entendu l'émetteur 202 et l'antenne de réception 203. Dans ces conditions les échos reçus par l'antenne 203 provenant des impulsions de durée T émises par l'émetteur 202, présentent un décalage Doppler même lorsqu'ils proviennent de la réverbération sur des obstacles fixes, dont la valeur correspond à une vitesse relative $2 V_A$. Le coefficient 2 provient de ce que l'émetteur et le récepteur avancent tous les deux à la vitesse $V_A$.

Pour éliminer ce décalage Doppler, et les inconvénients qu'il présente, il faudrait que l'antenne de réception se déplace dans le sens opposé au mouvement du bateau avec une vitesse $V_A$. Ceci n'est manifestement pas possible puisque, même si on laisse le câble de remorquage se dévider librement, l'antenne resterait au mieux immobile dans la mer et l'on aurait donc un décalage Doppler correspondant à une vitesse $V_A$ due au mouvement de l'émetteur. Pour obtenir une compensation complète, l'invention propose de sélectionner au moins un ensemble de M capteurs consécutifs parmi les N capteurs constituant l'antenne et de déplacer électroniquement cet ensemble le long de l'antenne 203 vers l'arrière de celle-ci à une vitesse égale à $2 V_A$ par rapport à l'antenne. Ainsi cet ensemble de N capteurs se déplace par rapport au milieu marin à une vitesse $V_A$ dirigée dans le sens opposé de l'avancement du bateau, ce qui permet de compenser totalement le décalage Doppler introduit sur les échos fixes par le déplacement du bateau et de l'antenne de réception. Tout se passe comme si les capteurs de l'antenne de réception étaient placés sur un tapis roulant à une vitesse $-2 V_A$ par rapport à l'antenne de réception. Lorsque le mouvement fictif de cet ensemble de M capteurs a amené la sous-antenne glissante à l'extrémité arrière de l'antenne physique, on repart à l'extrémité avant de celle-ci, ce qui se fait instantanément puisqu'il s'agit de simples commutations électroniques.

Le traitement du signal consiste, comme on l'a vu plus haut, outre la formation de voies, à corréler les signaux reçus avec une copie du signal émis. Ce signal étant une impulsion de durée T, la corrélation nécessite d'utiliser un signal reçu pendant cette même durée T. Comme les M capteurs se déplacent fictivement le long de l'antenne il faut donc que la sous-antenne ainsi sélectionnée soit suffisamment petite pour ne pas déborder de l'extrémité arrière de l'antenne avant la fin de la durée T. Ceci impose une valeur maximale à M en fonction de T, qui est donnée par la relation :

$$(3) \qquad Nd \geq Md + 2 V_A T$$

Bien entendu on aura intérêt à s'arranger pour que cette inégalité soit une égalité afin d'avoir un nombre maximal de capteurs utilisés pour obtenir le meilleur signal reçu. Ce cas est représenté sur le diagramme de la figure 2 où l'on voit une première sous-antenne partir du début de l'antenne physique pour arriver à la fin de celle-ci au bout d'un temps T. Ce mouvement est représenté par la surface hachurée 301.

Lorsque cette première sous-antenne est arrivée à la fin elle repart donc au début selon la ligne pointillée 311.

Ce traitement va bien entendu donner des signaux de sortie toutes les T secondes, qui correspondent à des échos répartis dans le temps tous les $2V_A T$ mètres, ce qui laisse des trous d'observation dans l'espace sous-marin. Le problème est identique lorsque l'on n'utilise pas ce système d'antenne glissante selon l'invention. Dans la pratique habituelle on effectue sur l'ensemble des capteurs de l'antenne des traitements identiques successifs échelonnés sur la durée T. Selon l'invention on pratiquera de même, mais en sélectionnant plusieurs sous-antennes glissantes qui partiront du début de l'antenne à des instants régulièrement échelonnés pendant cette durée T. Le nombre des sous-antennes ainsi sélectionnées sera essentiellement fonction des capacités de traitement du système informatique qui effectue tous ces calculs, en regard de la couverture que l'on souhaite obtenir, compte tenu de ce qu'un écho n'est pas ponctuel, Comme il n'y a pas nécessité d'avoir une couverture strictement continue, dans la pratique un recouvrement de 75% est souvent suffisant et correspond alors à 4 sous-antennes 301 à 304 qui partent les unes après les autres du début de l'antenne physique pendant la durée T. Au bout de la durée T, l'antenne 301 repart du début de l'antenne comme représenté sur la référence 321 dans la figure 3. Exprimé d'une autre manière, cela signifie que généralement l'instant d'arrivée d'une impulsion sur l'antenne ne coïncide pas avec l'instant où la sous-antenne se trouve au début de l'antenne. Aussi il faut traiter plusieurs sous-antennes pendant la durée T.

On a supposé implicitement jusqu'à présent que pour obtenir cette compensation du mouvement on pouvait à tout instant sélectionner les bons capteurs aux bons endroits pour constituer une sous-antenne se déplaçant avec la vitesse correcte. Le traitement s'effectuant, comme cela est courant maintenant, de manière numérique sur des échantillons de signal prélevés sur les capteurs, on peut donc se contenter d'un nombre discret de capteurs répartis le long de l'antenne. Néanmoins comme l'échantillonnage est assez rapide pour tenir compte d'une part du critère de Nyquist et d'autre part de certaines limitations qui seront vues plus loin dans le texte, et qu'en outre il faut prévoir que la vitesse du bateau peut être variable, on est amené à faire subir à la sous-antenne un mouvement fictif formé d'une série de sauts en arrière d'une distance 1 toutes les dt secondes. Ce mouvement est représenté partiellement par la partie crénelée 312 sur la figure 3. Compte tenu des ordres de grandeurs couramment utilisés, il est difficile, comme on le voit sur la figure, d'avoir un nombre suffisant de capteurs pour sélectionner ceux situés aux bons endroits.

On est donc alors amené à effectuer une interpolation contre plusieurs capteurs successifs pour obtenir le signal correspondant à un capteur intermédiaire situé à l'endroit adéquat. Cette technique est tout à fait courante dans l'art connu et ne présente aucune difficulté.

Dans ces conditions, et comme les capteurs réels subissent un mouvement physique continu, les signaux provenant d'une cible située dans un gisement $\theta$ et animée d'une vitesse dont la projection sur la direction $\theta$ vaut $V_c$, auront une phase, si $f_0$ est la fréquence centrale de l'impulsion émise et c la vitesse du son dans le milieu marin, qui dépendra du temps selon la formule :

$$(4) \qquad o = 2 \, \P \, (1 + \frac{2 \, Vc}{c}) \, f_o t + \phi \, (t)$$

Le terme correcteur $\phi$ (t), dont la variation est représentée sur la figure 4, provient justement du caractère incrémental de la compensation du mouvement de l'antenne.

Le spectre du signal reçu, qui est représenté de manière qualitative sur la figure 5, comprend donc des lobes images dont l'amplitude est donnée par la formule :

$$(5) \qquad A = \sin (\P \, 1.\cos \theta.fo/c) \, /[\P. \, (1 + 1.\cos \theta.fo/c)]$$

et la position par la formule :

$$(6) \qquad f = (1 + 2 \, Vc/c) \, fo \pm \frac{1}{dt}$$

Ces lobes sont donc, comme on le remarque bien sur la figure 5, espacés tous les 1/dt. La figure 5 ne représente bien entendu que le lobe principal et les deux lobes secondaires d'ordre qui sont les plus importants.

Il convient donc, pour ne pas gâcher les résultats intéressants de l'invention par des perturbations apportées par ces lobes images, d'éliminer leur influence. Quand on aura éliminé l'influence des lobes d'ordre +1 et -1, on aura automatiquement éliminé celle des lobes d'ordre supérieur.

Cette élimination se fait par le choix de 1 selon l'un des deux critères suivants, en prenant le moins astreignant :

- On peut réduire l'amplitude des lobes de façon qu'elle soit inférieure au niveau spectral désiré Ns pour ces lobes ce qui impose à 1 de vérifier la relation :

$$(7) \qquad 20 \log (\sin \P (1.\cos \theta fo/c) / \P. \, (1 + 1.\cos \theta fo/c) \geq Ns$$

Pour une valeur couramment recherchée pour Ns de -40 dB, 1 doit alors être inférieur à 1/100ème de la longueur d'onde d'émission dans le cas ou cos $\theta$ = 1, ce qui est une valeur petite et astreignante.

- l'autre façon d'éliminer l'influence du lobe image est de choisir 1 de sorte que la position de ce lobe image tombe en dehors de la bande de réception Br du sonar, ce qui amène, puisque 1/dt doit être supérieur ou égal à Br, à respecter la relation :

$$(8). \qquad 1 \leq 2V_A/Br$$

En prenant pour exemple un sonar fonctionnant à $f_o$ = 3.000 Hz pour détecter des cibles se déplaçant à une vitesse maximale de 30 m/s, correspondant à une bande Br égale à 240 Hz pour une vitesse du son dans l'eau de 1.500 m/s, et pour une vitesse du bateau $V_A$ = 10 m/s, on obtient pour 1 une valeur maximale égale à 1/6ème de la longueur d'onde. On constate que cette valeur est beaucoup moins contraignante que la précédente. Dans la plupart des cas ce sera donc ce critère qui sera choisi.

Comme il est courant dans l'art de placer les capteurs avec un espacement égal à 1/2 longueur d'onde, on voit donc que l'on est le plus souvent amené à effectuer l'interpolation décrite plus haut. Cette interpolation se fait de manière connue à partir des $nM_i$ capteurs les plus proches du capteur virtuel dont la position doit être interpolée. Ce nombre $M_i$ dépend (de manière connue) essentiellement du pas d des capteurs physiques et du secteur angulaire de réception, de façon à avoir un nombre suffisant d'échantillons pour interpoler de manière valable. La relation (3) sur le nombre de capteurs physiques à utiliser devient alors la relation :

$$(9) \qquad Nd \geq Md + 2v_A T + M_i d$$

Compte tenu des ordres de grandeurs utilisés ne change que peu de chose, puisque $M_i$ est nettement inférieur à M dans la pratique.

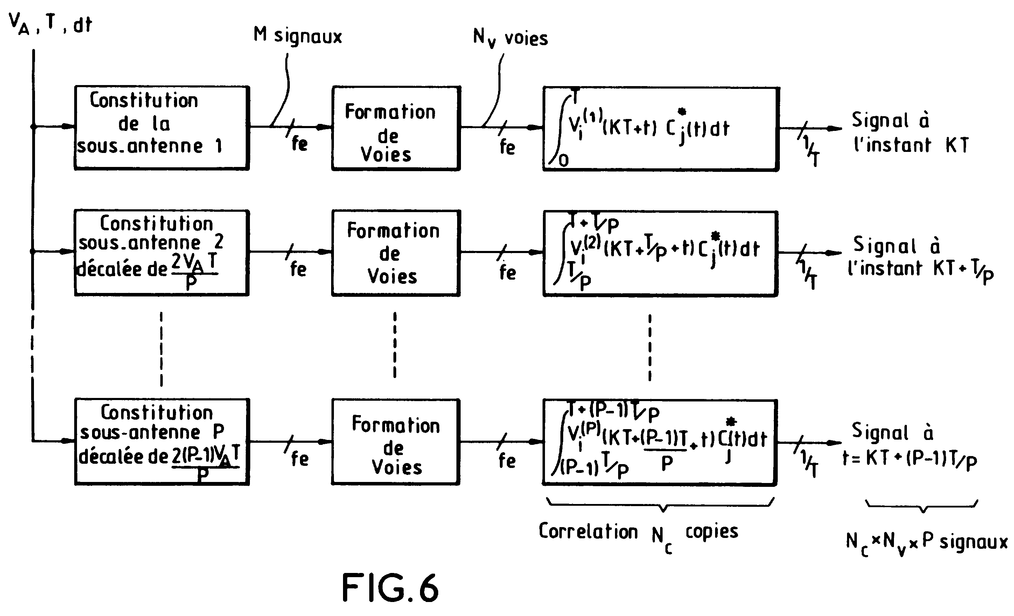

Le traitement s'effectue alors selon le synoptique représenté sur la figure 6. Pour P sous-antennes il y a P voies de traitement comportant chacune 3 étapes :

- dans une première étape on constitue la sous-antenne en choisissant les capteurs physiques ou virtuels nécessaires pour obtenir la compensation de l'effet Doppler ;
- dans une deuxième étape on forme les voies de réception ;
- dans une troisième étape on effectue la corrélation des signaux de ces voies avec les copies des signaux émis par l'émetteur du sonar.

Les étapes de formation de voies et de corrélation sont tout à fait classiques. Celle correspondant à la constitution d'une sous-antenne de rang k pour chaque incrément de déplacement fictif de durée dt, se décompose en 3 sousétapes :

- dans une première étape on calcule la position des M capteurs virtuels (éventuellement réels) à utiliser, en prenant la relation :

$$(10) \qquad x = 2V_A \, n \, dt + 2V_A \, (k-1) \, \frac{T}{P} + id \ ( \ o \leq i \leq M-1)$$

n est l'indice courant qui détermine la position de la sous-antenne à chaque instant sur l'antenne physique ;
- dans une deuxième sous-étape on sélectionne les $M_i$ capteurs physiques qui correspondent à chaque capteur virtuel dont la position a été déterminée dans la première sous-étape, ainsi que les $M_i$ coefficients d'interpolation à appliquer aux signaux de ces capteurs physiques pour obtenir le signal du capteur virtuel ;
- dans une troisième sous-étape on reconstitue par interpolation les M signaux de la sous-antenne k.

Tout ce traitement s'effectue en numérique comme c'est l'habitude maintenant, avec un échantillonnage des capteurs physiques à une fréquence fe suffisante pour pouvoir former les voies et telle qu'en outre fe soit supérieure à 1/dt.

En reprenant les chiffres de l'exemple de réalisation donné plus haut, pour une antenne linéaire comportant 200 capteurs espacés de 0,2 m et se déplaçant à une vitesse de 10 m/s (20 noeuds) et avec une impulsion d'une durée de 1 seconde, chaque sous-antenne glissante comprend 88 capteurs virtuels, chacun de ces capteurs étant reconstitués à partir de 12 capteurs physiques. Bien entendu un même capteur physique peut être utilisé pour reconstituer plusieurs capteurs virtuels.

A titre de variante, et pour des valeurs d'interpolation relativement faibles, on pourrait utiliser directement un nombre suffisant de capteurs physiques. Ceci est particulièrement intéressant pour des fréquences d'émission faibles. C'est ainsi que dans l'exemple décrit plus haut, si on prend comme fréquence d'émission 1.000 Hz on peut utiliser directement les signaux des capteurs physiques sans interpolation, à la vitesse donnée du bateau.

Comme il est bien connu dans l'art on peut bien entendu permuter les deux étapes de formation de voies et de corrélation.

Le procédé selon l'invention permet donc de compenser l'effet Doppler dû à la réverbération, sans être obligé de recourir à une augmentation de la réjection spatiale des voies de réception, toujours difficile et coûteuse, voire impossible, à obtenir. En outre puisque l'on a annulé le décalage Doppler, la plage de décalage pour les cibles se trouve elle-même réduite, ce qui permet de réduire le nombre de copies utilisées pour la corrélation.

Enfin il est bien clair que si l'invention a été décrite dans le cas d'une antenne sonar d'émission relativement ponctuelle et d'une antenne de réception linéaire remorquée sur laquelle on effectue la compensation du mouvement, l'invention s'étend à tous les types de sonars où l'on est susceptible de compenser le mouvement de la, ou des, antennes de cette manière. En particulier on utilise parfois des antennes linéaires remorquées dites actives où l'émetteur sonar est situé à l'intérieur de ces antennes. On peut alors effectuer la compensation au niveau de l'émission et même éventuellement répartir cette compensation entre l'émission et la réception.

**Revendications**

1. Procédé de compensation du mouvement de l'antenne pour un sonar, dans lequel l'antenne (203) comprend un ensemble de transducteurs (205) et est entraînée dans un mouvement de translation, caractérisé en ce que l'on commute les signaux de ces transducteurs pour obtenir un mouvement fictif de l'antenne permettant de compenser le décalage Doppler apporté aux échos fixes par ledit mouvement de translation.

2. Procédé selon la revendication 1, caractérisé en ce que, l'antenne étant une antenne linéaire remorquée (203) comprenant un ensemble de transducteurs régulièrement répartis le long de cette antenne, l'on sélectionne au moins un sous-ensemble (M) de transducteurs successifs que l'on fait glisser fictivement de manière incrémentale le long de l'antenne dans le sens opposé du mouvement de celle-ci.

3. Procédé selon la revendication 2, caractérisé en ce que l'on interpole les signaux des transducteurs (205) sélectionnés pour obtenir des capteurs fictifs intercalés entre deux successifs desdits transducteurs afin de diminuer l'incrément (312) du mouvement fictif pour diminuer l'effet des lobes images du signal de sortie provenant du caractère incrémental du mouvement.

4. Procédé selon l'une quelconque des revendications 2 et 3, caractérisé en ce que l'on sélectionne plusieurs sous-ensembles (301-304) de transducteurs successifs que l'on fait partir successivement du début de l'antenne de manière étagée dans le temps pour couvrir la totalité du champ d'observation du sonar.

5. Procédé selon l'une quelconque des revendications 2 à 4, caractérisé en ce que l'antenne linéaire étant une antenne de réception destinée à recevoir un écho de durée déterminée (T), on sélectionne un nombre de transducteurs (M) qui permette à ceux-ci de parcourir la totalité de l'antenne pendant cette durée.

**Patentansprüche**

1. Verfahren zur Kompensation der Bewegung der Antenne für ein Sonargerät, in dem die Antenne (203) eine Gruppe von Wandlern (205) enthält und zu einer Translationsbewegung angetrieben wird, dadurch gekennzeichnet, daß die Signale dieser Wandler umgeschaltet werden, um eine fiktive Bewegung der Antenne zu erhalten, die die Kompensation der Doppler-Verschiebung ermöglicht, welche den festen Echos durch die Translationsbewegung verliehen wird.

2. Verfahren nach Anspruch 1, dadurch gekennzeichnet, daß dann, wenn die Antenne eine geschleppte lineare Antenne (203) ist, die eine Gruppe von längs dieser Antenne regelmäßig verteilten Wandlern enthält, wenigstens eine Untergruppe (M) von aufeinanderfolgenden Wandlern gewählt wird, die längs der Antenne in der zu ihrer Bewegung entgegengesetzten Richtung auf inkrementierende Weise fiktiv verschoben werden.

3. Verfahren nach Anspruch 2, dadurch gekennzeichnet, daß die Signale der gewählten Wandler (205) interpoliert werden, um fiktive Aufnehmer zu erhalten, die zwischen zwei aufeinanderfolgende der Wandler eingefügt sind, um das Inkrement (312) der fiktiven Bewegung zu verringern, um die Wirkung der Bildkeulen des Ausgangssignals, die sich aus dem inkrementierenden Charakter der Bewegung ergeben, zu verringern.

4. Verfahren nach einem der Ansprüche 2 und 3, dadurch gekennzeichnet, daß mehrere Untergruppen (301-304) von aufeinanderfolgenden Wandlern gewählt werden, die nacheinander auf zeitlich abgestufte Weise vom Anfang der Antenne ausgehen, um das gesamte Beobachtungsfeld des Sonargerätes zu bedecken.

5. Verfahren nach irgendeinem der Ansprüche 2 bis 4, dadurch gekennzeichnet, daß dann, wenn die lineare Antenne eine Empfangsantenne ist, die dazu bestimmt ist, ein Echo mit bestimmter Dauer (T) zu empfangen, eine Anzahl von Wandlern gewählt wird, die diesen ermöglicht, während dieser Dauer die gesamte Antenne zu durchlaufen.

**Claims**

1. Method of compensating for the movement of the antenna for a sonar, in which the antenna (203) comprises a set of transducers (205) and is drawn along in a translational movement, characterized in that the signals from these transducers are switched in order to obtain a synthetic movement of the antenna making it possible to compensate for the Doppler shift applied to the fixed echoes by the said translational movement.

2. Method according to Claim 1, characterized in that, the antenna being a towed linear antenna (203) comprising a set of transducers regularly distributed along this antenna, at least one subset (M) of successive transducers is selected, which is made to slide synthetically in an incremental way along the antenna in the direction opposite to the movement of the latter.

3. Method according to Claim 2, characterized in that the signals from the selected transducers (205) are interpolated in order to obtain synthetic sensors interspaced between two of the said successive transducers so as to reduce the increment (312) of the synthetic movement in order to reduce the effect of the image lobes of the output signal originating from the incremental nature of the movement.

4. Method according to either of Claims 2 or 3, characterized in that several subsets (301-304) of successive transducers are selected, which are made to depart successively from the start of the antenna in a way which is staged in time in order to cover the whole of the field of observation of the sonar.

5. Method according to any one of Claims 2 to 4, characterized in that, the linear antenna being a receiving antenna intended to receive an echo of defined duration (T), a number of transducers (M) is selected, which allows them to travel over the whole of the antenna during this duration.

FIG.1

FIG.2

$$\Phi_M = \frac{2\pi V_A dt \cos\theta}{C/f_0}$$

FIG.4

FIG.5

8

FIG.3

EP 0 580 695 B1

$V_A$, T, dt

M signaux

$N_v$ voies

| Constitution de la sous.antenne 1 | | Formation de Voies | | $\int_0^T V_i^{(1)}(KT+t)\, C_j^*(t)\, dt$ | | Signal à l'instant KT |
|---|---|---|---|---|---|---|

fe → fe → $\frac{1}{T}$

| Constitution sous.antenne 2 décalée de $\frac{2V_A T}{P}$ | | Formation de Voies | | $\int_{T/P}^{T+T/P} V_i^{(2)}(KT+T/P+t)\, C_j^*(t)\, dt$ | | Signal à l'instant $KT+T/P$ |
|---|---|---|---|---|---|---|

fe → fe → $\frac{1}{T}$

| Constitution sous-antenne P décalée de $\frac{2(P-1)V_A T}{P}$ | | Formation de Voies | | $\int_{(P-1)T/P}^{T+(P-1)T/P} V_i^{(P)}(KT+\frac{(P-1)T}{P}+t)\, C_j^*(t)\, dt$ | | Signal à $t = KT + (P-1)T/P$ |
|---|---|---|---|---|---|---|

fe → fe → $\frac{1}{T}$

Correlation $N_c$ copies

$N_c \times N_v \times P$ signaux

# FIG.6